(19)

Europäisches Patentamt
European Patent Office
Office européen des brevets

(11)  **EP 3 903 242 B1**

(12)  **EUROPEAN PATENT SPECIFICATION**

(45) Date of publication and mention
of the grant of the patent:
**30.10.2024  Bulletin 2024/44**

(21) Application number: **19725429.5**

(22) Date of filing: **29.03.2019**

(51) International Patent Classification (IPC):
**G06N 10/20** *(2022.01)*

(52) Cooperative Patent Classification (CPC):
**G06N 10/20**

(86) International application number:
**PCT/RU2019/000203**

(87) International publication number:
**WO 2020/204741 (08.10.2020 Gazette 2020/41)**

(54)  **DEVICE AND METHODS FOR A QUANTUM CIRCUIT SIMULATOR**

GERÄT UND VERFAHREN FÜR EINEN QUANTEN-SCHALTKREIS-SIMULATOR

DISPOSITIF ET PROCÉDÉS POUR SIMULATEUR DE CIRCUIT QUANTIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**03.11.2021  Bulletin 2021/44**

(73) Proprietor: **Huawei Technologies Co., Ltd.**
**Longgang District,**
**Shenzhen, Guangdong 518129 (CN)**

(72) Inventors:
• **KOLMAKOV, Dmitry Sergeevich**
**Shenzhen, Guangdong, 518129 (CN)**
• **ZOTOV, Yuriy Alexandrovich**
**Shenzhen, Guangdong, 518129 (CN)**
• **KALENDAROV, Andrei Emilevich**
**Shenzhen, Guangdong, 518129 (CN)**

(74) Representative: **Körber, Martin Hans et al**
**Mitscherlich PartmbB**
**Patent- und Rechtsanwälte**
**Karlstraße 7**
**80333 München (DE)**

(56) References cited:
**US-A1- 2019 095 561**

• **PEDRAM MASSOUD ET AL: "Layout Optimization for Quantum Circuits with Linear Nearest Neighbor Architectures", IEEE CIRCUITS AND SYSTEMS MAGAZINE, vol. 16, no. 2, 24 May 2016 (2016-05-24), pages 62 - 74, XP011612122, ISSN: 1531-636X, [retrieved on 20160523], DOI: 10.1109/MCAS.2016.2549950**
• **THOMAS HÄNER ET AL: "0.5 Petabyte Simulation of a 45-Qubit Quantum Circuit", ARXIV.ORG, CORNELL UNIVERSITY LIBRARY, 201 OLIN LIBRARY CORNELL UNIVERSITY ITHACA, NY 14853, 4 April 2017 (2017-04-04), XP081292850, DOI: 10.1145/3126908.3126947**
• **ODDI ANGELO ET AL: "Greedy Randomized Search for Scalable Compilation of Quantum Circuits", 8 June 2018, INTERNATIONAL CONFERENCE ON FINANCIAL CRYPTOGRAPHY AND DATA SECURITY; [LECTURE NOTES IN COMPUTER SCIENCE; LECT.NOTES COMPUTER], SPRINGER, BERLIN, HEIDELBERG, PAGE(S) 446 - 461, ISBN: 978-3-642-17318-9, XP047474560**
• **MEHDI SAEEDI ET AL: "Synthesis of Quantum Circuits for Linear Nearest Neighbor Architectures", ARXIV.ORG, CORNELL UNIVERSITY LIBRARY, 201 OLIN LIBRARY CORNELL UNIVERSITY ITHACA, NY 14853, 28 October 2011 (2011-10-28), XP080535930, DOI: 10.1007/S11128-010-0201-2**

EP 3 903 242 B1

**Description**

TECHNICAL FIELD

The disclosure relates to the field of Quantum Computing, and more specifically to the simulation of quantum circuits on classical computers. In particular, the disclosure relates to a device for a quantum circuit simulator, and a quantum circuit simulator including at least one such device. Further, the disclosure relates to a method for quantum gate and qubit scheduling for a quantum circuit simulator, wherein the method may be performed by the device.

BACKGROUND

A universal quantum circuit simulator stores a mathematical representation of the whole state of a simulated quantum computer in a memory. The size of this state scales as $2^n$, with n being the number of simulated qubits of the quantum computer. For 40 qubits, the size of this state is 16TiB. This requires usage of a multi-node computing system, in order to distribute the large state across multiple memories of the nodes. During simulation of the quantum circuit, access to the parts of the state from the remote nodes is required.

In order to simulate quantum computations on a classical computer, one can use a linear algebraic representation of the quantum computation (quantum circuit). In this representation, the state of an *n*-qubit quantum circuit is a vector $\vec{\Psi}$ in a Hilbert space with the orthonormal basis $\{\vec{\psi_i}\}$. The dimension of the space is equal to $2^n$. According to quantum computation theory, the following relations hold:

$$\vec{\Psi} = \sum_{i=0}^{2^n-1} \alpha_i \cdot \vec{\psi_i}, \quad \sum |\alpha_i|^2 = 1, \quad \alpha_i \in \mathbb{C}, \quad \vec{\psi_i} \in \mathbb{C}^{2^n} \quad\quad (1)$$

From the above relations, the straightforward way to represent the state of the quantum computer in a memory is to store $2^n$ complex numbers $\{\alpha_i\}$, which are called *amplitudes* of corresponding basis states. The value $|\alpha_i|^2$ determines the probability to observe the basis state *i* as an output of the quantum circuit/computer.

The quantum computation may be expressed as a linear unitary operator *U* acting on the vector $\vec{\Psi}$ yielding the resulting state $\vec{\Psi'}$:

$$\vec{\Psi'} = U \cdot \vec{\Psi} \quad\quad (2)$$

Since the basis in the Hilbert space is defined, the operator U is represented by a matrix of dimensions $2^n \times 2^n$.

In quantum computation, a quantum gate is defined as the basic unitary operator, which acts on one or a few qubits. Practical quantum gates are of sizes 1-, 2- and 3-qubits. Using these quantum gates, any *quantum algorithm* can be expressed. According to the above equation (5), any quantum algorithm can be represented by a unitary matrix and a relation between a sequence of quantum gates and an operator U:

$$U = U_m \otimes \cdots U_i \cdots \otimes U_1 \quad\quad (3)$$

In other words, the quantum algorithm can be expressed as tensor product of quantum gates, each quantum gate acting on a subset of qubits.

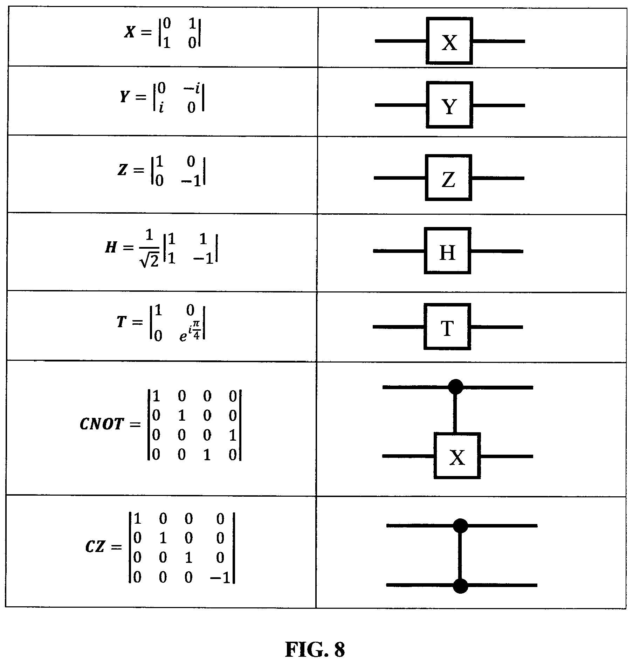

A typical set of quantum gates, which are used in most common quantum algorithms, is show in FIG. 8. Therein, *CNOT* and CZ are examples of a special kind of quantum gates, which are called *controlled gates.* Such quantum gates act on 2 or more qubits, wherein one or more qubits act as a control for some operation. The qubit, upon which an operation is performed, is called *target,* and other qubits are called *control.*

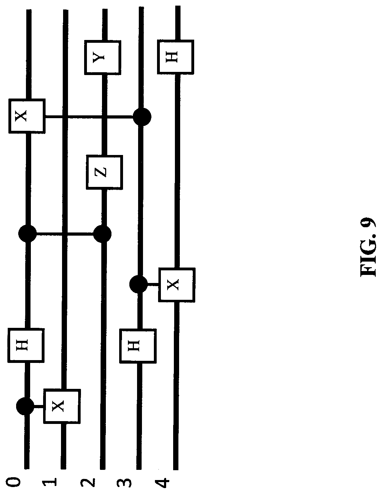

Using a graphical representation, it is possible to draw a quantum circuit for a quantum algorithm - as exemplarily shown in FIG. 9. Numbered horizontal lines represent qubits, and quantum gates acting on qubits are placed on corresponding lines. The quantum gates are applied in order from left to right. From the properties of the tensor product according to the above relation (3), one can conclude that quantum gates acting on disjoint sets of qubits are commute. A set of quantum gates sharing the same horizontal position is called a *layer* of a quantum circuit.

As already noted above, the universal quantum circuit simulator stores, in a computer memory, an array of $2^n$ complex numbers (coefficients $\alpha_i$ from relation (1)). Using e.g. IEEE754 double precision floating point representation,

this requires $16 \cdot 2^n$ bytes of memory. One can easily see that the memory requirements very quickly become intractable for a single computer, when the number of qubits grows (e.g. 40 qubits require 16TiB of memory). The simulator program in this case has to split the state vector into parts and store in memory of several computers (nodes, as already described above).

Let the quantum simulator operate on $n = L + R$ qubits. Then, if a single computer can store just $2^L$ elements of a state vector, the number of required computer nodes is $2^R$.

A natural way to select a basis in the above relation (1) is to assign to a basis state $\overrightarrow{\psi_i}$ the state, in which qubits are $|0\rangle$ or $|1\rangle$ according to a binary representation of index $i$. For example: for three qubits there are 8 basis states $\{\overrightarrow{\psi_0},$ $\overrightarrow{\psi_1}, \overrightarrow{\psi_2}, \overrightarrow{\psi_3}, \overrightarrow{\psi_4}, \overrightarrow{\psi_5}, \overrightarrow{\psi_6}, \overrightarrow{\psi_7}\}$. In the basis state $\overrightarrow{\psi_{0=000}}$ all qubits are in the state $|0\rangle$, in $\overrightarrow{\psi_{2=010}}$ the qubit 1 in the state $|1\rangle$ and two others in state 0, and in $\overrightarrow{\psi_{6=110}}$ qubits 1 and 2 are in state $|1\rangle$ and qubit 0 in state $|0\rangle$.

According to a state vector distribution scheme, it is obvious that every node stores all amplitudes, which determine the probability of $|0\rangle$ and $|1\rangle$ for first $L$ qubits, when states of other $R$ qubits are fixed equal to the binary representation of a node's rank. In this document, the first $L$ qubits are called *local qubits* and the last $R$ qubits are called *global qubits.*

When a quantum gate is applied to one or more local qubits, the matrix-vector multiplication is performed on each node locally, and does not require access to amplitudes stored on remote nodes, because other qubits are not affected by the gate. When a quantum gate is applied to one or more global qubits, the matrix-vector multiplication cannot be performed, because a computing node cannot directly access the memory in a remote computer. In this situation, a mechanism of data exchange is required.

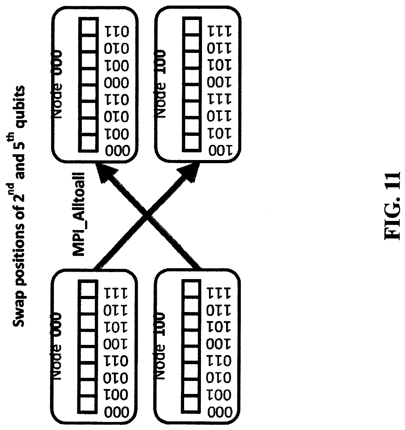

A conventional approach proposed a method of *qubit reordering* when qubits are renumbered and corresponding amplitudes are transferred between nodes and stored in a corresponding node's memory according to new qubit numbers and the node's ranks. This process is called *qubits swapping,* because qubits and amplitudes exchange their positions, and is illustrated in FIG. 11. This method can be used to simulate a quantum gate, which originally is applied to global qubits. In this case one needs just exchange numbers between global qubits involved in an operation and some unused local qubits, then transfer corresponding amplitudes between nodes. After that, the quantum gate acting on local qubits can be simulated.

It is common for distributed computing to use an MPI library to perform a data exchange between nodes, and so express data exchange patterns in the program in terms of MPI operations. The qubit swapping operation can be done using a single MPI_Alltoall operation. Any number of qubits less than or equal to R can be swapped at once. It is easy to show that the amount of transferred amplitudes is equal to

$$\Delta N = 2^L \cdot \left(1 - \frac{1}{2^k}\right), \qquad (4)$$

where k is the number of swapped global qubits. From the above relation (4), it is obvious that swapping several qubits at once requires less data to transfer than swapping them sequentially one by one.

However, a typical quantum circuit can contain hundreds of thousands of gates. Without any optimization technique, each gate implies a matrix-vector multiplication and in a distributed case, amplitudes must be transferred between nodes a huge number of times. Thus, in the above-described approach, without a careful definition of a set of qubits to swap, there could be an extra overhead for the data exchange if some qubits in a set are not involved into a sufficient number of gates applications. The approach does not provide any suggestions on how to determine optimal set of qubits to reorder.

Another approach describes an open source implementation of a distributed quantum circuit simulator - QuEST. In QuEST, the above-described method of qubit reordering is used, but the implementation is restricted to single qubit swaps only.

The most sophisticated approach to quantum circuit simulation uses a scheduling component (scheduler), which determines the order of gates to be applied and qubits sets to reorder. Gates are reordered into sequences called stages. A stage contains gates acting on local qubits. Inside the stage gates form subsequences called clusters. Gates from the same cluster are fused into a single multi-qubit gate, and this gate is simulated by a single matrix-vector multiplication. Between stages, a qubit reordering occurs.

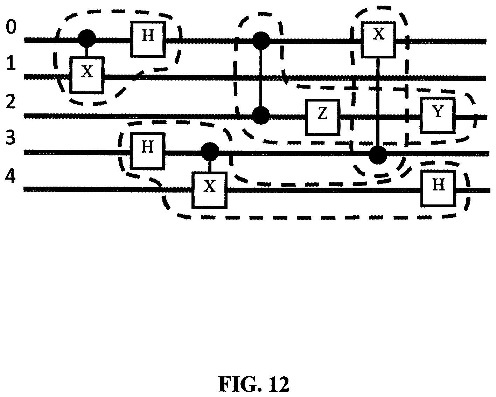

FIG. 12 shows an illustration of such clusters of gates and stages. Assuming that qubits 0-2 are local currently and 3-4 are global, the first stage consists of 2 clusters of gates outlined by grey lines, and the second stage consists of cluster outlined by black lines. After applying gates for the first stage qubits, reordering occurs: 3, 4 are swapped with 1, 2, and then second stage can be applied.

The main problem in implementing this approach is the methods of construction of clusters and stages. The approach does not describe any algorithm, and does also not provide the source code of the scheduler.

PEDRAM MASSOUD ET AL: "Layout Optimization for Quantum Circuits with Linear Nearest Neighbor Architectures", IEEE CIRCUITS AND SYSTEMS MAGAZINE, vol. 16, no. 2, pages 62-74, XP011612122, discloses minimizing the number of required qubit reorderings (achieved by inserting explicit SWAP gates) when mapping a quantum circuit into a linear nearest neighbor quantum architecture. Qubits interactions of a given circuit are modelled by introducing an interaction graph, and local qubit reorderings are found in order to minimize the number of required SWAP gates. The approach decomposes a given circuit into several clusters (or subcircuits), where each cluster contains consecutive two-qubit gates, and uses the MINLA problem within each subcircuit to find qubit locations for qubits involved in each subcircuit. Intra-cluster SWAP gates are inserted inside each subcircuit to localize the remaining nonlocalized gates. Additional (intercluster) SWAP gates are inserted between consecutive subcircuits to transform one qubit ordering to another to keep circuit functionally unchanged.

In summary, although a main set of methods for quantum circuit simulation is available, including scheduling of gates, gates clusters construction, and qubits reordering, the problem of finding an optimal order of gates and qubits remains unsolved. All previous approaches do not describe any method to calculate qubits and gates permutation according to a well-defined optimality criteria.

## SUMMARY

In view of the above-mentioned problems and disadvantages, embodiments of the present invention aim to improve the current approaches. An objective is to provide a sophisticated method for gates and qubits permutation calculation for a quantum circuit simulator. This should result in an optimal data exchange and an optimal quantum gate application schedule in a quantum circuit simulator, and should accordingly reduce the amount of data transferred between nodes. The calculated permutations should provide a minimum number of matrix-vector multiplications and a minimum amount of data transfer. To this end, a device and method should be provided, which can be used in distributed quantum circuit simulator for gate scheduling and qubits reordering scheduling.

The objective is achieved by the embodiments of the invention as described in the enclosed independent claims. Advantageous implementations of the present invention are further defined in the dependent claims.

In particular, embodiments of the invention propose a device and method, which calculate an optimal data exchange and quantum gate application schedule, and thus significantly reduce the amount of data transferred between nodes, as well as the amount of arithmetical operations to be performed. All of this leads to an increase of quantum circuit simulator performance, particularly up to several times.

The embodiments of the invention base on the understanding that associativity of a tensor product operation allows splitting the relation (3) into factors in different ways, thus constructing factors according to performance of computation or memory consumption considerations:

$$\mathrm{U} = U_m \otimes \cdots U_i \cdots \otimes U_1 = (U_m \cdots \otimes \cdots U_i) \otimes (U_{i-1} \cdots \otimes \cdots U_1) = \widetilde{U}_2 \otimes \widetilde{U}_1 \qquad (5)$$

The above relation (5), and commute properties of quantum gates been applied, lay the core of embodiments of the invention optimizing a quantum circuit simulation by means of gate sequence permutation.

Based on an individual gate's properties, and using a greedy algorithm, the device and method calculate specifically a permutation of gates and a permutation of qubits, which lead to a minimum number of clusters in a stage, and minimum number of stages during a quantum circuit simulation.

A first aspect of the invention provides a device for a quantum circuit simulator, the device being configured to: obtain a first sequence of quantum gates, which when executed on the quantum circuit simulator require performing matrix-vector multiplications on the quantum circuit simulator, generate a second sequence of quantum gates, which is a subsequence of the first sequence of quantum gates, by using a first greedy algorithm, with backtracking, calculate a local qubits set and a global qubits set based on the second sequence of quantum gates, generate a set of clusters of quantum gates based on the second sequence of quantum gates,, wherein each cluster includes a subset of the quantum gates of the second sequence of quantum gates merged together by using a second greedy algorithm without backtracking, generate a third sequence of quantum gates, which contains all quantum gates from the second sequence of quantum gates, according to an order of the clusters, provide the local qubits set and the global qubits set to the quantum circuit simulator, and output the third sequence of quantum gates to the quantum circuit simulator. The device is further configured to, when generating the set of clusters of quantum gates: order a cluster including more quantum gates before a cluster including less quantum gates in the order of the clusters.

The calculated sets of local and global qubits are in particular "best" local qubits and global qubits sets. "Best" thereby means the best the algorithm can do. That is, the algorithm searches for many variants of these qubits sets, and may then select qubits sets which have the maximum number of gates in the second sequence. Local qubits sets can be deliberately predefined before running the algorithm by the device of the first aspect. This implies that the algorithm will include quantum gates, which act on these qubits.

The device of the first aspect can be used in a distributed quantum circuit simulator, and may provide gate scheduling and qubits reordering. In other words, the device can provide a sophisticated gates and qubits permutation calculation for the quantum circuit simulator. The calculated permutations allow an optimal data exchange and quantum gate application schedule in a quantum circuit simulator, thus significantly reducing the amount of data transferred between nodes of the simulator.

In an implementation form of the first aspect, the device is further configured to, when generating the set of clusters of quantum gates: generate the clusters based on a maximum possible number of qubits in a cluster.

The above implementation forms lead to an improved efficiency of the algorithm performed by the device of the first aspect.

In an implementation form of the first aspect, the device is further configured to, when generating the set of clusters of quantum gates: pick one-by-one all possible combinations of qubits associated with the second sequence of quantum gates based on the maximum possible number of qubits in a cluster, construct a cluster for each combination, and select the cluster with the greatest number of quantum gates in it.

In an implementation form of the first aspect, the device is further configured to, when generating the set of clusters of quantum gates: maintain a set of locked qubits, include a quantum gate into a cluster, if matrix representation of the quantum gate is diagonal, skip a quantum gate, if at least one of the qubits that quantum gate acts on does not belong to a picked combination of qubits, and/or skip a quantum gate, if at least one of the qubits that quantum gate acts on is in the set of locked qubits, add all qubits a quantum gate acts on to the set of locked qubits, if that quantum gate is skipped, and include a quantum gate into a cluster otherwise.

In an implementation form of the first aspect, the device is further configured to, when generating the set of clusters of quantum gates: determine a cluster including a maximum number of quantum gates, output the quantum gates of the determined cluster, in particular insert the output quantum gates into the third sequence of quantum gates, and remove the output quantum gates from the second sequence of quantum gates.

In an implementation form of the first aspect, the device is further configured to, when calculating the local qubits set and the global qubits set: determine the local qubits set and/or the global qubits set based on a maximum number of local and/or global qubits, respectively.

In an implementation form of the first aspect, the device is further configured to, when generating the second sequence of quantum gates: fuse a quantum gate acting on a single qubit with an adjacent quantum gate in the first sequence of quantum gates acting on a subset of qubits including the same single qubit.

In an implementation form of the first aspect, the device is further configured to, when generating the second sequence of quantum gates: include, into the second sequence of quantum gates, quantum gates that operate on at most the maximum number of local qubits, and if the first sequence of quantum gates includes at least one quantum gate acting on a single qubit and another quantum gate acting on the same qubit and on at least one other qubit, include, into the second sequence of quantum gates, this single-qubit gate together with the other multi-qubit gate.

In an implementation form of the first aspect, the device is further configured to, when generating the second sequence of quantum gates: create a branch of the first greedy algorithm with a quantum gate included into the second sequence of quantum gates, and/or create a branch of the first greedy algorithm with a quantum gate from the first sequence of quantum gates skipped, add all qubits a quantum gate acts on to the set of local qubits, if that quantum gate is included or, add all qubits a quantum gate acts on to the set of locked qubits, if that quantum gate is skipped.

In an implementation form of the first aspect, the device is further configured to, when generating the second sequence of quantum gates: create at most a maximum number of branches of the first greedy algorithm.

In an implementation form of the first aspect, the device is further configured to, when applying a branch of the first greedy algorithm: construct the second sequence of quantum gates with as much gates as possible, and test each gate from the first sequence of quantum gates and skip or include it into the second sequence of quantum gates based on the result of the test.

In an implementation form of the first aspect, the device is further configured to, when generating the second sequence of quantum gates: maintain a set of locked qubits, skip a quantum gate, if application of this quantum gate will require more qubits than a predetermined threshold to be local, and/or skip a quantum gate, if at least one of the qubits the quantum gate operates on is in a locked qubits set, and add all qubits a quantum gate acts on to the set of locked qubits, if that quantum gate is skipped.

In an implementation form of the first aspect, the device is further configured to, when generating the second sequence of quantum gates: include a quantum gate into the second sequence of quantum gates, if a matrix representation of that quantum gate is diagonal and do not add qubits a quantum gate acts on to the set of local qubits, and/or include a quantum gate into the second sequence of quantum gates, if all qubits that quantum gate operates on are already in the local qubits set.

In an implementation form of the first aspect, the device is further configured to, when calculating the local qubits set and the global qubits set: construct a set of all qubits, on which quantum gates from the first sequence of quantum gates act, include, in the local qubits set, all qubits on which quantum gates from the second sequence of

5

quantum gates act, and include, in the global qubits set, all qubits which are in the set of all qubits and not in the local qubits set.

A second aspect of the invention provides a quantum circuit simulator comprising the device according to the first aspect or any of its implementation forms.

A third aspect of the invention provides a computer-implemented method for quantum gate and qubit scheduling for a quantum circuit simulator, the method comprising: obtaining a first sequence of quantum gates, which when executed on the quantum circuit simulator require performing matrix-vector multiplications on the quantum circuit simulator, generating a second sequence of quantum gates, which is a subsequence of the first sequence of quantum gates, by using a first greedy algorithm, with backtracking, calculating a local qubits set and a global qubits set based on the second sequence of quantum gates, generating a set of clusters of quantum gates based on the second sequence of quantum gates, wherein each cluster includes a subset of the quantum gates of the second sequence of quantum gates merged together by using a second greedy algorithm without backtracking, generating a third sequence of quantum gates, which contains all quantum gates from the second sequence of quantum gates, according to an order of the clusters, providing the local qubits set and the global qubits sets to the quantum circuit simulator, and outputting the third sequence of quantum gates to the quantum circuit simulator. The generating the set of clusters of quantum gates further comprises ordering a cluster including more quantum gates before a cluster including less quantum gates in the order of the clusters.

A fourth aspect of the invention provides a computer program product comprising a program code that, when executed on a computer, carries out, the method according to the third aspect or any of its implementation forms. all qubits a quantum gate acts on to the set of locked qubits, if that quantum gate is skipped, and including a quantum gate into a cluster otherwise.

In an implementation form of the fourth aspect, the method further comprises, when generating the set of clusters of quantum gates: determining a cluster including a maximum number of quantum gates, outputting the quantum gates of the determined cluster, in particular inserting the output quantum gates into the third sequence of quantum gates, and removing the output quantum gates from the second sequence of quantum gates.

In an implementation form of the fourth aspect, the method further comprises, when calculating the local qubits set and the global qubits set: determining the local qubits set and/or the global qubits set based on a maximum number of local and/or global qubits, respectively.

In an implementation form of the fourth aspect, the method further comprises, when generating the second sequence of quantum gates: fusing a quantum gate acting on a single qubit with an adjacent quantum gate in the first sequence of quantum gates acting on a subset of qubits including the same single qubit.

In an implementation form of the fourth aspect, the method further comprises, when generating the second sequence of quantum gates: including, into the second sequence of quantum gates, quantum gates that operate on at most the maximum number of local qubits, and if the first sequence of quantum gates includes at least one quantum gate acting on a single qubit and another quantum gate acting on the same qubit and on at least one other qubit, including, into the second sequence of quantum gates, this single-qubit gate together with the other multi-qubit gate.

In an implementation form of the fourth aspect, the method further comprises, when generating the second sequence of quantum gates: creating a branch of the greedy algorithm with a quantum gate included into the second sequence of quantum gates, and/or creating a branch of the greedy algorithm with a quantum gate from the first sequence of quantum gates skipped, adding all qubits a quantum gate acts on to the set of local qubits, if that quantum gate is included or, adding all qubits a quantum gate acts on to the set of locked qubits, if that quantum gate is skipped.

In an implementation form of the fourth aspect, the method further comprises, when generating the second sequence of quantum gates: creating at most a maximum number of branches of the greedy algorithm.

In an implementation form of the fourth aspect, the method further comprises, when applying a branch of the greedy algorithm: constructing the second sequence of quantum gates with as much gates as possible, and testing each gate from the first sequence of quantum gates and skip or include it into the second sequence of quantum gates based on the result of the test.

In an implementation form of the fourth aspect, the method further comprises, when generating the second sequence of quantum gates: maintaining a set of locked qubits, skipping a quantum gate, if application of this quantum gate will require more qubits than a predetermined threshold to be local, and/or skipping a quantum gate, if at least one of the qubits the quantum gate operates on is in a locked qubits set, and adding all qubits a quantum gate acts on to the set of locked qubits, if that quantum gate is skipped.

In an implementation form of the fourth aspect, the method further comprises, when generating the second sequence of quantum gates: including a quantum gate into the second sequence of quantum gates, if a matrix representation of that quantum gate is diagonal and not adding qubits a quantum gate acts on to the set of local qubits, and/or include a quantum gate into the second sequence of quantum gates, if all qubits that quantum gate operates on are already in the local qubits set.

In an implementation form of the fourth aspect, the method further comprises, when calculating the local qubits set and the global qubits set: constructing a set of all qubits, on which quantum gates from the first sequence of quantum gates act, including, in the local qubits set, all qubits on which quantum gates from the second sequence of quantum gates act, and including, in the global qubits set, all qubits which are in the set of all qubits and not in the local qubits set.

It has to be noted that all devices, elements, units and means described in the present application could be implemented in the software or hardware elements or any kind of combination thereof. All steps which are performed by the various entities described in the present application as well as the functionalities described to be performed by the various entities are intended to mean that the respective entity is adapted to or configured to perform the respective steps and functionalities. Even if, in the following description of specific embodiments, a specific functionality or step to be performed by external entities is not reflected in the description of a specific detailed element of that entity which performs that specific step or functionality, it should be clear for a skilled person that these methods and functionalities can be implemented in respective software or hardware elements, or any kind of combination thereof.

## BRIEF DESCRIPTION OF THE DRAWINGS

The above described aspects and implementation forms of the present invention will be explained in the following description of specific embodiments in relation to the enclosed drawings, in which

FIG. 1 shows a device for a quantum circuit simulator.
FIG. 2 shows a pseudocode of a cluster scheduling method performed by a device for a quantum circuit simulator.
FIG. 3 shows a block scheme of a cluster scheduling method performed by a device for a quantum circuit simulator.
FIG. 4 shows a pseudocode of a stage scheduling method performed by a device for a quantum circuit simulator.
FIG. 5 shows a block scheme of a stage scheduling method performed by a device for a quantum circuit simulator.
FIG. 6 shows, in (a), scheduler results on different supremacy circuits, and shows, in (b), results of a 30-layers supremacy circuit simulation by a quantum circuit simulator compared to a QuEST simulator on 8-nodes cluster.
FIG. 7 shows a method for quantum gate and qubit scheduling for a quantum circuit simulator.
FIG. 8 shows typical quantum gates and their quantum circuit representation.
FIG. 9 shows a graphical representation of a quantum circuit for a quantum algorithm.

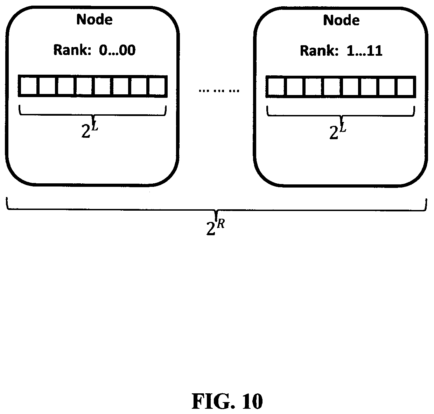

FIG. 10 shows a scheme of state vector distribution.
FIG. 11 illustrates qubit swapping.
FIG. 12 illustrates clusters of gates and stages.

## DETAILED DESCRIPTION OF THE EMBODIMENTS

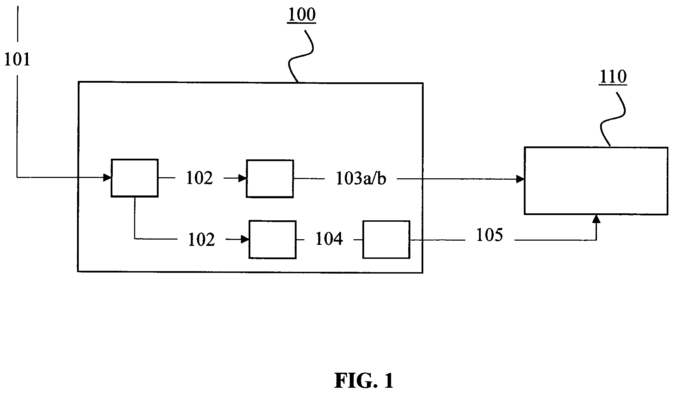

FIG. 1 shows a device 100. The device 100 is suitable for a quantum circuit simulator 110. The device 100 may be part of the quantum circuit simulator 110, or may be connected to the quantum circuit simulator 110. The device 100 is in particular configured to schedule quantum gates and qubits for the quantum circuit simulator 110, in order to improve the performance of the quantum circuit simulator. The quantum circuit simulator 110 may be one or more classical computers or computer nodes, which are together configured to simulate the execution of a quantum circuit on a quantum computer. The quantum circuit simulator 110 may include at least one device 100, or may work together with at least one device 100.

The device 100 is configured to obtain a first sequence 101 of quantum gates, e.g. according to a quantum circuit received as an input to the device 100. The quantum circuit may be a quantum circuit to be simulated on/by the quantum circuit simulator 110. The device 100 is further configured to generate a second sequence 102 of quantum gates, which is a subsequence of the first sequence 101 of quantum gates. The device 100 thereby uses a greedy algorithm, in particular with backtracking. That is, the second sequence of quantum gates 102 is generated based on the first sequence 101 of quantum gates using a greedy algorithm with backtracking.

Further, the device 100 is configured to calculate a local qubits set 103a and a global qubits set 103b, respectively, based on the generated second sequence 102 of quantum gates. These qubits sets may be referred to as optimal or final qubits sets. In addition, the device 100 is also adapted to generate a set of clusters 104 of quantum gates, wherein each cluster 104 includes a subset of the quantum gates of the second sequence 102 of quantum gates, which are merged together by using a greedy algorithm. The greedy algorithm may be similar in nature to the greedy algorithm used for generating the second sequence 102. Then, the device 100 is configured to generate a third sequence 105 of quantum gates, which contains all quantum gates from the second sequence 102 of quantum gates, according to an order of the clusters 104 of quantum gates.

Finally, the device 100 is configured to provide the local qubits set 103a and the global qubits set 103b to the quantum circuit simulator 110, and to also output the third sequence 105 of quantum gates to the quantum circuit simulator. Based on these inputs, the quantum circuit simulator 110 can simulate the quantum circuit with less data required to be transferred between multiple nodes of the simulator 110, as well as with less arithmetical operations performed.

Notably, in the device 100 of FIG. 1, the generating of the clusters 104 of quantum gates and the generation of the third sequence 105 of quantum gates may be referred to as cluster scheduling algorithm. This algorithm allows the device 100 to perform the quantum gate scheduling for the simulator 110. The calculation and outputting of the qubits sets 103a and 103b may be referred to as a stage scheduling algorithm. This algorithm allows the device 100 to perform qubit scheduling for the simulator 110.

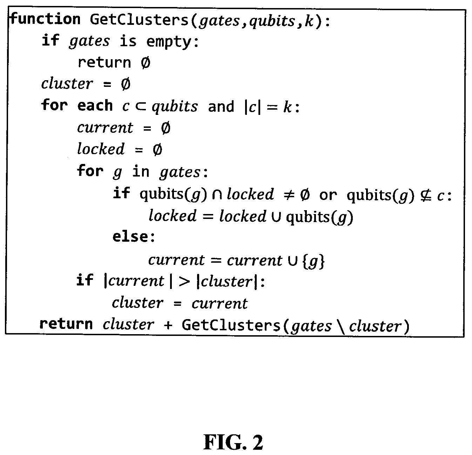

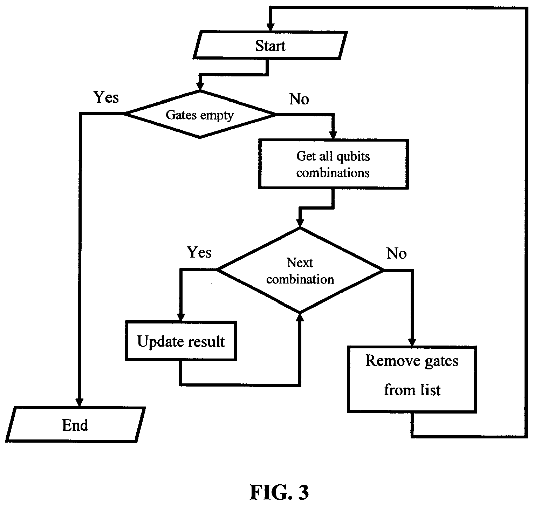

FIG. 2 shows a pseudocode of a cluster scheduling algorithm that can be performed by the device 100, in particular by the device 100 of FIG. 1, in order to generate the sets of clusters 104 and output the third sequence 105 of quantum gates. FIG. 3 further shows a block scheme of the cluster scheduling algorithm.

The cluster scheduling algorithm has two parameters: *"qubits"*, i.e. the set of all qubits involved in an input sequence of quantum gates; and k, which is the maximum possible number of qubits in a cluster 104. The algorithm further takes a sequence of quantum gates as an input (i.e. in particular the second sequence 102 of quantum gates).

The algorithm further merges quantum gates into clusters 104 of quantum gates. It thereby tries to minimize a total number of clusters 104 generated. Further, the algorithm uses a greedy approach, which: a) finds a cluster 104 with a maximum number of quantum gates included; b) returns the cluster 104 as a result; and removes the cluster's 104 quantum gates from the input sequence of quantum gates; and c) proceeds again with a).

At step 0, the algorithm may pick all possible combinations of k qubits one by one, may generate a sequence of quantum gates containing only qubits from this combination that could be merged in one cluster 104, and may pick the largest size list as next cluster 104. The device 100 can further perform an immediate fusing of single-qubit quantum gates. A single-qubit quantum gate *g* acting on a qubit *q* does not change the total number of stages, if there exists at least one multi-qubit gate acting on qubit *q*. Thus, this quantum gate *g* can be immediately fused (merged) to/with any of its neighboring quantum gates containing the qubit *q*. This optimization is beneficial for significantly speeding up a stage scheduling algorithm, which can be performed by the device 100 and is described next.

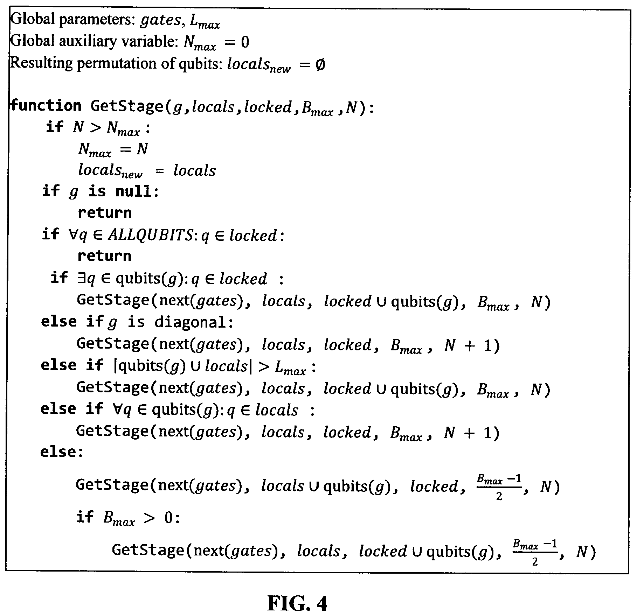

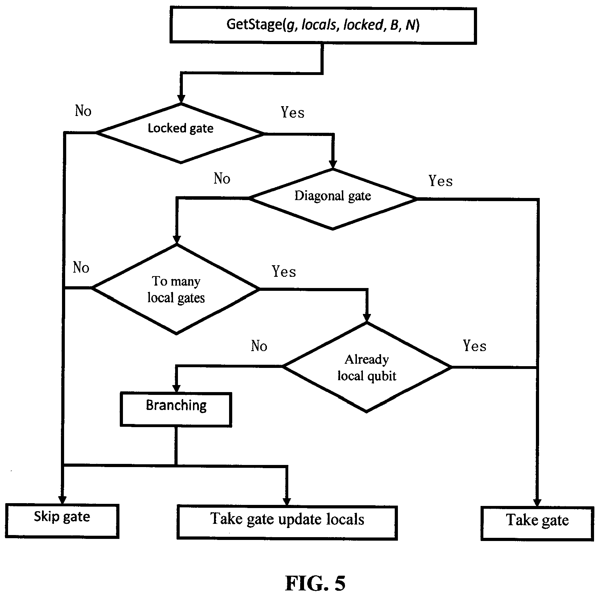

FIG. 4 shows a pseudocode of a stage scheduling algorithm that can be performed by the device 100, in particular by the device 100 of FIG. 1, in order to schedule and output qubits. FIG. 5 shows a block scheme of the stage scheduling algorithm.

The stage scheduling algorithm has two parameters: $L_{max}$, which is the maximum number of local qubits; and $B_{max}$, which is a maximum number of branches to create. The algorithm takes a list of quantum gates as input. The algorithm returns a set 103a of qubits, which have to be local during current stage. The algorithm thereby tries to minimize the total number of stages. The algorithm, in particular, uses a greedy approach, i.e. it constructs the stage, which contains as much quantum gates as possible. The algorithm may also backtrack on a sequence of quantum gates and may maintain: a) *locals,* i.e. a set of qubits wanted to be local during the stage; b) *locked,* i.e. a set of locked qubits (qubits with some operation skipped); c) *B,* i.e. a maximum possible number of new branches in this branch of backtracking; and d) *N,* i.e. a number of taken quantum gates in this stage.

The process of the algorithm may be specifically according to the following case analysis:

- If at least one of gate qubits or gate control qubits is locked, a quantum gate has to be skipped.
- Else, if a gate matrix is diagonal, it could be applied to local and global qubits as well, without adding any requirements to the qubits.
- Else, if an application of this quantum gate will require too many qubits to be local, the gate is skipped.
- Else, if all gate qubits are already required to be local, a quantum gate could be applied as well without adding any requirements.
- Else, if applying/skipping a gate cannot be uniquely determined, the algorithm branches on two: one branch with this gate skipped; and another branch with this gate applied.

When the algorithm skips a gate, all its qubits may become locked. When the algorithm decides to apply a non-diagonal gate, all its qubits may be required to be local. If all qubits become locked during the backtracking, the algorithm may return to the previous level of recursion.

Some of the qubits could be kept local deliberately, e.g. by prepopulating *locals* set of qubits before starting the algorithm. This can allow other optimizations to be performed in the simulator 110, due to regulation of memory placement layout of amplitudes to be swapped.

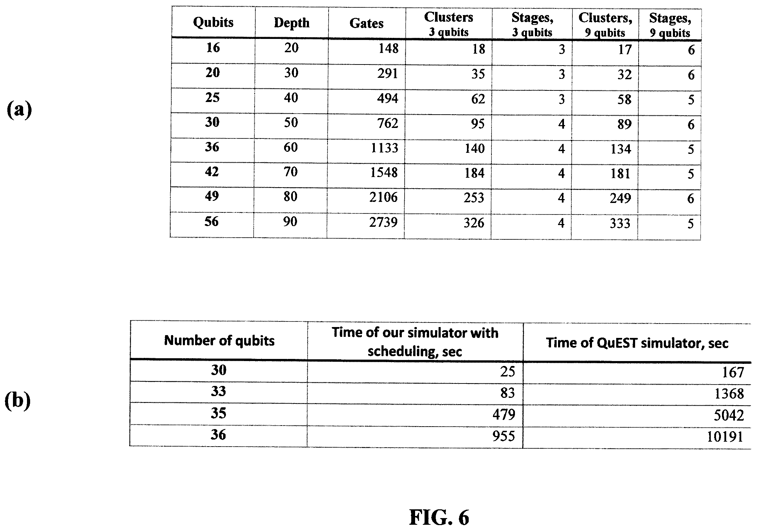

FIG. 6 shows, in (a), results of the method performed by the device 100. The device 100 has been tested with 3 global qubits and a different numbers of total qubits. According to resulting permutation between stages, a swap of all global qubits with the same number of local qubits has been applied.

A quantum circuit simulator 110, i.e. including a device 100 as shown in FIG. 1, is compared with the QuEST simulator, in particular with a QuEST simulator on an 8-nodes cluster, in (b) of FIG. 6. The simulator 110 demonstrates an order of magnitude better performance, due to a reduction of the number of matrix-vector multiplications. This is, because of the cluster stage algorithm/method performed by device 100, and the reduction of the amount of data transfer due to stage scheduling algorithm/method.

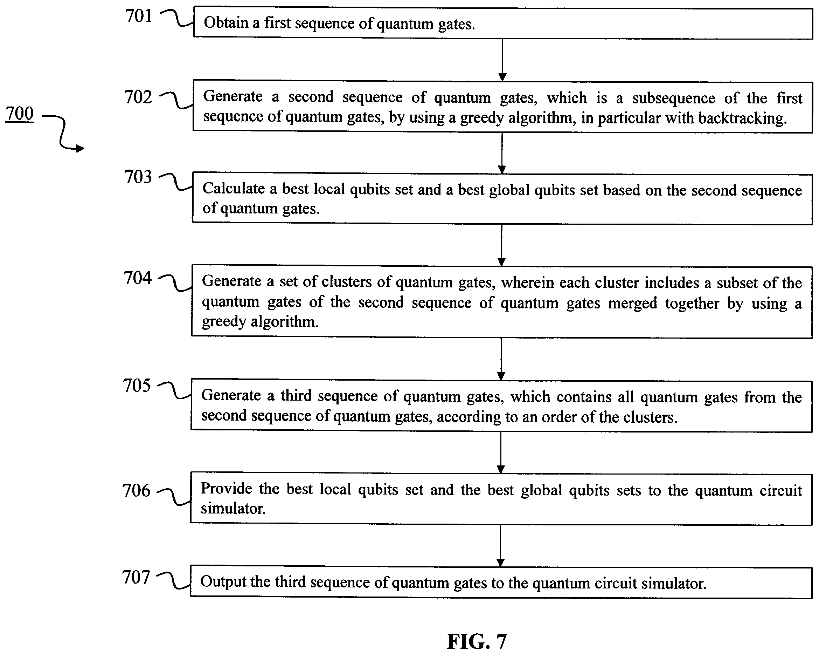

FIG. 7 shows a method 700. The method 700 is for quantum gate and qubit scheduling for a quantum circuit simulator 110. The method 700 may be performed by the device 100 of FIG. 1, or by a quantum circuit simulator 110 including such a device 100.

The method comprises: a step 701 of obtaining a first sequence 101 of quantum gates; a step 702 of generating a second sequence 102 of quantum gates, which is a subsequence of the first sequence 101 of quantum gates, by using a greedy algorithm, in particular with backtracking; a step 703 of calculating a local qubits set 103a and a global qubits set 103b based on the second sequence 102 of quantum gates; a step 704 of generating a set of clusters 104 of quantum gates, wherein each cluster 104 includes a subset of the quantum gates of the second sequence 102 of quantum gates merged together by using a greedy algorithm; a step 705 of generating a third sequence 105 of quantum gates, which contains all quantum gates from the second sequence 102 of quantum gates, according to an order of the clusters 104; a step 706 of providing the local qubits set 103a and the global qubits set 103b to the quantum circuit simulator 110; and a step 707 of outputting the third sequence 105 of quantum gates to the quantum circuit simulator 110.

The present invention has been described in conjunction with various embodiments as examples as well as implementations. However, other variations can be understood and effected by those persons skilled in the art and practicing the claimed invention, from the studies of the drawings, this disclosure and the independent claims. In the claims as well as in the description the word "comprising" does not exclude other elements or steps and the indefinite article "a" or "an" does not exclude a plurality. A single element or other unit may fulfill the functions of several entities or items recited in the claims. The mere fact that certain measures are recited in the mutual different dependent claims does not indicate that a combination of these measures cannot be used in an advantageous implementation.

**Claims**

1. Device (100) for a quantum circuit simulator (110), the device (100) being configured to:

   obtain a first sequence (101) of quantum gates, which when executed on the quantum circuit simulator (110) require performing matrix-vector multiplications on the quantum circuit simulator (110),
   generate a second sequence (102) of quantum gates, which is a subsequence of the first sequence (101) of quantum gates, by implementing a first greedy algorithm with backtracking,
   calculate a local qubits set (103a) and a global qubits set (103b) based on the second sequence (102) of quantum gates,
   generate a set of clusters (104) of quantum gates based on the second sequence (102) of quantum gates, wherein each cluster (104) includes a subset of the quantum gates of the second sequence (102) of quantum gates merged together by implementing a second greedy algorithm without backtracking,
   generate a third sequence (105) of quantum gates, which contains all quantum gates from the second sequence (102) of quantum gates, according to an order of the clusters (104),
   provide the local qubits set (103a) and the global qubits set (103b) to the quantum circuit simulator (110), and
   output the third sequence (105) of quantum gates to the quantum circuit simulator,
   wherein the device (100) is further configured to, when generating the set of clusters (104) of quantum gates:
   order a cluster (104) including more quantum gates before a cluster (104) including less quantum gates in the order of the clusters (104).

2. Device (100) according to claim 1, further configured to, when generating the set of clusters (104) of quantum gates: generate the clusters (104) based on a maximum possible number of qubits in a cluster (104).

3. Device (100) according to claim 2, further configured to, when generating the set of clusters (104) of quantum gates:

   pick one-by-one all possible combinations of qubits associated with the second sequence (102) of quantum gates based on the maximum possible number of qubits in a cluster (104),
   construct a cluster (104) for each combination, and
   select the cluster (104) with the greatest number of quantum gates in it.

4. Device (100) according to claim 3, further configured to, when generating the set of clusters (104) of quantum gates:

   maintain a set of locked qubits,
   include a quantum gate into a cluster (104), if matrix representation of the quantum gate is diagonal,
   skip a quantum gate, if at least one of the qubits that quantum gate acts on does not belong to a picked combination of qubits, and/or

skip a quantum gate, if at least one of the qubits that quantum gate acts on is in the set of locked qubits,
add all qubits a quantum gate acts on to the set of locked qubits, if that quantum gate is skipped, and
include a quantum gate into a cluster (104) otherwise.

5. Device (100) according to one of the claims 1 to 4, further configured to, when generating the set of clusters (104) of quantum gates:

   determine a cluster (104) including a maximum number of quantum gates,
   output the quantum gates of the determined cluster (104), in particular insert the output quantum gates into the third sequence (105) of quantum gates, and
   remove the output quantum gates from the second sequence (102) of quantum gates.

6. Device (100) according to one of the claims 1 to 5, further configured to, when calculating the local qubits set (103a) and the global qubits set (103b):
   determine the local qubits set (103a) and/or the global qubits set (103b) based on a maximum number of local and/or global qubits, respectively.

7. Device (100) according to one of the claims 1 to 6, further configured to, when generating the second sequence (102) of quantum gates:
   fuse a quantum gate acting on a single qubit with an adjacent quantum gate in the first sequence (101) of quantum gates acting on a subset of qubits including the same single qubit.

8. Device (100) according to one of the claims 1 to 7, further configured to, when generating the second sequence (102) of quantum gates:

   include, into the second sequence (102) of quantum gates, quantum gates that operate on at most the maximum number of local qubits, and
   if the first sequence (101) of quantum gates includes at least one quantum gate acting on a single qubit and another quantum gate acting on the same qubit and on at least one other qubit, include, into the second sequence (102) of quantum gates, this single-qubit gate together with the other multi-qubit gate.

9. Device (100) according to one of the claims 1 to 8, further configured to, when generating the second sequence (102) of quantum gates:

   create a branch of the first greedy algorithm with a quantum gate included into the second sequence (102) of quantum gates, and/or
   create a branch of the first greedy algorithm with a quantum gate from the first sequence (101) of quantum gates skipped,
   add all qubits a quantum gate acts on to the set (103a) of local qubits, if that quantum gate is included or,
   add all qubits a quantum gate acts on to the set of locked qubits, if that quantum gate is skipped.

10. Device (100) according to claim 9, further configured to, when generating the second sequence (102) of quantum gates:
    create at most a maximum number of branches of the first greedy algorithm.

11. Device (100) according to claim 9 or 10, further configured to, when applying a branch of the first greedy algorithm:

    construct the second sequence (102) of quantum gates with as much gates as possible, and
    test each gate from the first sequence (101) of quantum gates and skip or include it into the second sequence (102) of quantum gates based on the result of the test.

12. Device (100) according to one of the claims 9 to 11, further configured to, when generating the second sequence (102) of quantum gates:

    maintain a set of locked qubits,
    skip a quantum gate, if application of this quantum gate will require more qubits than a predetermined threshold to be local, and/or
    skip a quantum gate, if at least one of the qubits the quantum gate operates on is in a locked qubits set, and

add all qubits a quantum gate acts on to the set of locked qubits, if that quantum gate is skipped.

13. Device (100) according to one of the claims 1 to 12, further configured to, when generating the second sequence (102) of quantum gates:

include a quantum gate into the second sequence (102) of quantum gates, if a matrix representation of that quantum gate is diagonal and do not add qubits a quantum gate acts on to the set (103a) of local qubits, and/or include a quantum gate into the second sequence (102) of quantum gates, if all qubits that quantum gate operates on are already in the local qubits set (103a).

14. Device (100) according to one of the claims 1 to 13, further configured to, when calculating the local qubits set (103a) and the global qubits set (103b):

construct a set of all qubits, on which quantum gates from the first sequence (101) of quantum gates act, include, in the local qubits set (103a), all qubits on which quantum gates from the second sequence (102) of quantum gates act, and include, in the global qubits set (103b), all qubits which are in the set of all qubits and not in the local qubits set (103a).

15. Quantum circuit simulator (110) comprising the device (100) according to any one of the claims 1 to 14.

16. A computer-implemented method (700) for quantum gate and qubit scheduling for a quantum circuit simulator (110), the method comprising:

obtaining (701) a first sequence (101) of quantum gates, which when executed on the quantum circuit simulator (110) require performing matrix-vector multiplications on the quantum circuit simulator (110), generating (702) a second sequence (102) of quantum gates, which is a subsequence of the first sequence (101) of quantum gates, by using a first greedy algorithm, with backtracking, calculating (703) a local qubits set (103a) and a global qubits set (103b) based on the second sequence (102) of quantum gates, generating (704) a set of clusters (104) of quantum gates based on the second sequence (102) of quantum gates, wherein each cluster (104) includes a subset of the quantum gates of the second sequence (102) of quantum gates merged together by using a second greedy algorithm without backtracking, generating (705) a third sequence (105) of quantum gates, which contains all quantum gates from the second sequence (102) of quantum gates, according to an order of the clusters (104), providing (706) the local qubits set (103a) and the global qubits set (103b) to the quantum circuit simulator (110), and outputting (707) the third sequence (105) of quantum gates to the quantum circuit simulator (110) wherein generating (704) the set of clusters (104) of quantum gates further comprises: ordering a cluster (104) including more quantum gates before a cluster (104) including less quantum gates in the order of the clusters (104).

17. Computer program product comprising a program code that, when executed on a computer, carries out the method (700) according to claim 16.

**Patentansprüche**

1. Gerät (100) für einen Quanten-Schaltkreis-Simulator (110), wobei das Gerät (100) zu Folgendem konfiguriert ist:

Erlangen einer ersten Sequenz (101) von Quantengattern, die bei Ausführung auf dem Quanten-Schaltkreis-Simulator (110) das Durchführen von Matrix-Vektor-Multiplikationen auf dem Quanten-Schaltkreis-Simulator (110) erfordern, Erzeugen einer zweiten Sequenz (102) von Quantengattern, die eine Teilsequenz der ersten Sequenz (101) von Quantengattern ist, durch Implementieren eines ersten Greedy-Algorithmus mit Backtracking, Berechnen eines lokalen Qubitsatzes (103a) und eines globalen Qubitsatzes (103b) basierend auf der zweiten Sequenz (102) von Quantengattern, Erzeugen eines Satzes von Clustern (104) von Quantengattern basierend auf der zweiten Sequenz (102) von Quantengattern, wobei jeder Cluster (104) eine Teilmenge der Quantengatter der zweiten Sequenz (102) von Quantengattern einschließt, die durch Implementieren eines zweiten Greedy-Algorithmus ohne Backtracking zusammengeführt werden,

Erzeugen einer dritten Sequenz (105) von Quantengattern, die alle Quantengatter aus der zweiten Sequenz (102) von Quantengattern enthält, gemäß einer Reihenfolge der Cluster (104),

Bereitstellen des lokalen Qubitsatzes (103a) und des globalen Qubitsatzes (103b) für den Quanten-Schaltkreis-Simulator (110) und

Ausgeben der dritten Sequenz (105) von Quantengattern an den Quanten-Schaltkreis-Simulator,

wobei das Gerät (100) beim Erzeugen des Satzes von Clustern (104) von Quantengattern ferner zu Folgendem konfiguriert ist:

Ordnen eines Clusters (104), der mehr Quantengatter einschließt, vor einem Cluster (104), der weniger Quantengatter einschließt, in der Reihenfolge der Cluster (104) .

2. Gerät (100) nach Anspruch 1, das beim Erzeugen des Satzes von Clustern (104) von Quantengattern ferner zu Folgendem konfiguriert ist:

Erzeugen der Cluster (104) basierend auf einer maximal möglichen Anzahl von Qubits in einem Cluster (104).

3. Gerät (100) nach Anspruch 2, das beim Erzeugen des Satzes von Clustern (104) von Quantengattern ferner zu Folgendem konfiguriert ist:

Auswählen aller möglichen Kombinationen von Qubits nacheinander, die der zweiten Sequenz (102) von Quantengattern zugeordnet sind, basierend auf der maximal möglichen Anzahl von Qubits in einem Cluster (104),

Erstellen eines Clusters (104) für jede Kombination und

Wählen des Clusters (104) mit der größten Anzahl von Quantengattern darin.

4. Gerät (100) nach Anspruch 3, das beim Erzeugen des Satzes von Clustern (104) von Quantengattern ferner zu Folgendem konfiguriert ist:

Aufrechterhalten eines Satzes von gesperrten Qubits,

Einschließen eines Quantengatters in einen Cluster (104), wenn die Matrixdarstellung des Quantengatters diagonal ist,

Überspringen eines Quantengatters, wenn mindestens eines der Qubits, auf das das Quantengatter einwirkt, nicht zu einer ausgewählten Kombination von Qubits gehört, und/oder Überspringen eines Quantengatters, wenn sich mindestens eines der Qubits, auf die das Quantengatter einwirkt, im Satz der gesperrten Qubits befindet,

Hinzufügen aller Qubits, auf die ein Quantengatter einwirkt, zum Satz der gesperrten Qubits, wenn das Quantengatter übersprungen wird, und

ansonsten Einschließen eines Quantengatters in einen Cluster (104) .

5. Gerät (100) nach einem der Ansprüche 1 bis 4, das beim Erzeugen des Satzes von Clustern (104) von Quantengattern ferner zu Folgendem konfiguriert ist:

Bestimmen eines Clusters (104), der eine maximale Anzahl von Quantengattern einschließt,

Ausgeben der Quantengatter des bestimmten Clusters (104), insbesondere Einfügen der ausgegebenen Quantengatters in die dritte Sequenz (105) von Quantengattern, und

Entfernen der Ausgabe-Quantengatter aus der zweiten Sequenz (102) von Quantengattern.

6. Gerät (100) nach einem der Ansprüche 1 bis 5, das bei der Berechnung des lokalen Qubitsatzes (103a) und des globalen Qubitsatzes (103b) ferner zu Folgendem konfiguriert ist:

Bestimmen des lokalen Qubitsatzes (103a) und/oder des globalen Qubitsatzes (103b) basierend auf einer maximalen Anzahl von lokalen und/oder globalen Qubits.

7. Gerät (100) nach einem der Ansprüche 1 bis 6, das beim Erzeugen der zweiten Sequenz (102) von Quantengattern ferner zu Folgendem konfiguriert ist:

Fusionieren eines auf ein einzelnes Qubit einwirkenden Quantengatters mit einem benachbarten Quantengatter in der ersten Sequenz (101) von Quantengattern, die auf eine Teilmenge von Qubits einwirkt, die dasselbe einzelne Qubit einschließen.

8. Gerät (100) nach einem der Ansprüche 1 bis 7, das beim Erzeugen der zweiten Sequenz (102) von Quantengattern ferner zu Folgendem konfiguriert ist:

Einschließen von Quantengattern in die zweite Sequenz (102) von Quantengattern, die auf höchstens der maximalen Anzahl von lokalen Qubits operieren und
wenn die erste Sequenz (101) von Quantengattern mindestens ein Quantengatter, das auf ein einzelnes Qubit einwirkt, und ein weiteres Quantengatter, das auf dasselbe Qubit und auf mindestens ein weiteres Qubit einwirkt, einschließt, Einschließen dieses Ein-Qubit-Gates zusammen mit dem anderen Multi-Qubit-Gate in die zweite Sequenz (102) von Quantengattern.

9. Gerät (100) nach einem der Ansprüche 1 bis 8, das beim Erzeugen der zweiten Sequenz (102) von Quantengattern ferner zu Folgendem konfiguriert ist:

Erstellen eines Zweigs des ersten Greedy-Algorithmus mit einem Quantengatter, das in die zweite Sequenz (102) von Quantengattern eingeschlossen ist und/oder
Erzeugen eines Zweigs des ersten Greedy-Algorithmus, bei dem ein Quantengatter aus der ersten Sequenz (101) von Quantengattern übersprungen wird,
Hinzufügen aller Qubits, auf die ein Quantengatter einwirkt, zum Satz (103a) der lokalen Qubits, wenn dieses Quantengatter eingeschlossen ist, oder
Hinzufügen aller Qubits, auf die ein Quantengatter einwirkt, zum Satz der gesperrten Qubits, wenn das Quantengatter übersprungen wird.

10. Gerät (100) nach Anspruch 9, das beim Erzeugen der zweiten Sequenz (102) von Quantengattern ferner zu Folgendem konfiguriert ist:
Erstellen höchstens einer maximalen Anzahl von Zweigen des ersten Greedy-Algorithmus.

11. Gerät (100) nach Anspruch 9 oder 10, das beim Anwenden eines Zweigs des ersten Greedy-Algorithmus ferner zu Folgendem konfiguriert ist:

Konstruieren der zweiten Sequenz (102) von Quantengattern mit so vielen Gattern wie möglich und
Prüfen jedes Quantengatters aus der ersten Sequenz (101) von Quantengattern und Überspringen oder Einschließen desselben in die zweite Sequenz (102) von Quantengattern basierend auf dem Ergebnis der Prüfung.

12. Gerät (100) nach einem der Ansprüche 9 bis 11, das beim Erzeugen der zweiten Sequenz (102) von Quantengattern ferner zu Folgendem konfiguriert ist:

Aufrechterhalten eines Satzes von gesperrten Qubits,
Überspringen eines Quantengatters, wenn bei der Anwendung dieses Quantengatters mehr Qubits als ein vorherbestimmter Schwellenwert benötigt werden, um lokal zu sein und/oder
Überspringen eines Quantengatters, wenn sich mindestens eines der Qubits, auf denen das Quantengatter operiert, in einem gesperrten Satz von Qubits befindet und
Hinzufügen aller Qubits, auf die ein Quantengatter einwirkt, zum Satz der gesperrten Qubits, wenn dieses Quantengatter übersprungen wird.

13. Gerät (100) nach einem der Ansprüche 1 bis 12, das beim Erzeugen der zweiten Sequenz (102) von Quantengattern ferner zu Folgendem konfiguriert ist:

Einschließen eines Quantengatters in die zweite Sequenz (102) von Quantengattern, wenn eine Matrixdarstellung dieses Quantengatters diagonal ist und keine Qubits, auf die ein Quantengatter einwirkt, zu dem Satz (103a) von lokalen Qubits hinzufügt und/oder
Einschließen eines Quantengatters in die zweite Sequenz (102) von Quantengattern, wenn alle Qubits, auf denen das Quantengatter operiert, bereits in dem lokalen Satz von Qubits (103a) sind.

14. Gerät (100) nach einem der Ansprüche 1 bis 13, das bei der Berechnung des lokalen Qubitsatzes (103a) und des globalen Qubitsatzes (103b) ferner zu Folgendem konfiguriert ist:

Konstruieren eines Satzes aller Qubits, auf die Quantengatter aus der ersten Sequenz (101) von Quantengattern einwirken,

Einschließen aller Qubits, auf die Quantengatter aus der zweiten Sequenz (102) von Quantengattern einwirken, in den Satz der lokalen Qubits (103a), und

Einschließen aller Qubits, die in dem Satz aller Qubits und nicht in dem lokalen Satz der Qubits (103a) enthalten sind, in den Satz der globalen Qubits (103b).

15. Quanten-Schaltkreis-Simulator (110), umfassend das Gerät (100) nach einem der Ansprüche 1 bis 14.

16. Computerimplementiertes Verfahren (700) zum Einplanen von Quantengattern und Qubits für einen Quanten-Schaltkreis-Simulator (110), wobei das Verfahren Folgendes umfasst:

Erlangen einer ersten Sequenz (101) von Quantengattern, die bei Ausführung auf dem Quanten-Schaltkreis-Simulator (110) das Durchführen von Matrix-Vektor-Multiplikationen auf dem Quanten-Schaltkreis-Simulator (110) erfordern,

Erzeugen (702) einer zweiten Sequenz (102) von Quantengattern, die eine Teilsequenz der ersten Sequenz (101) von Quantengattern ist, unter Verwendung eines ersten Greedy-Algorithmus mit Backtracking,

Berechnen (703) eines lokalen Qubitsatzes (103a) und eines globalen Qubitsatzes (103b) basierend auf der zweiten Sequenz (102) von Quantengattern,

Erzeugen (704) eines Satzes von Clustern (104) von Quantengattern basierend auf der zweiten Sequenz (102) von Quantengattern, wobei jeder Cluster (104) eine Teilmenge der Quantengatter der zweiten Sequenz (102) von Quantengattern einschließt, die unter Verwendung eines zweiten Greedy-Algorithmus ohne Backtracking zusammengeführt werden,

Erzeugen (705) einer dritten Sequenz (105) von Quantengattern, die alle Quantengatter aus der zweiten Sequenz (102) von Quantengattern enthält, gemäß einer Reihenfolge der Cluster (104),

Bereitstellen (706) des lokalen Qubitsatzes (103a) und des globalen Qubitsatzes (103b) für den Quanten-Schaltkreis-Simulator (110) und

Ausgeben (707) der dritten Sequenz (105) von Quantengattern an den Quanten-Schaltkreis-Simulator (110),

wobei das Erzeugen (704) des Satzes von Clustern (104) von Quantengattern ferner Folgendes umfasst:

Ordnen eines Clusters (104), der mehr Quantengatter einschließt, vor einem Cluster (104), der weniger Quantengatter einschließt, in der Reihenfolge der Cluster (104) .

17. Computerprogrammprodukt, umfassend einen Programmcode, der bei Ausführung auf einem Computer das Verfahren (700) nach Anspruch 16 durchführt.

**Revendications**

1. Dispositif (100) pour simulateur de circuit quantique (110), le dispositif (100) étant configuré pour :

obtenir une première séquence (101) de portes quantiques qui, lorsqu'elles sont exécutées sur le simulateur de circuit quantique (110), nécessitent d'effectuer des multiplications matrice-vecteur sur le simulateur de circuit quantique (110),

générer une deuxième séquence (102) de portes quantiques, qui est une sous-séquence de la première séquence (101) de portes quantiques, en mettant en œuvre un premier algorithme glouton avec retour en arrière,

calculer un ensemble de qubits locaux (103a) et un ensemble de qubits globaux (103b) en fonction de la deuxième séquence (102) de portes quantiques,

générer un ensemble de groupes (104) de portes quantiques en fonction de la deuxième séquence (102) de portes quantiques, dans lequel chaque groupe (104) comporte un sous-ensemble de portes quantiques de la deuxième séquence (102) de portes quantiques fusionnées ensemble en mettant en œuvre un second algorithme glouton sans retour en arrière,

générer une troisième séquence (105) de portes quantiques, qui contient toutes les portes quantiques de la deuxième séquence (102) de portes quantiques, selon un ordre des groupes (104), fournir l'ensemble de qubits locaux (103a) et l'ensemble de qubits globaux (103b) au simulateur de circuit quantique (110), et

transmettre la troisième séquence (105) de portes quantiques au simulateur de circuit quantique,

dans lequel le dispositif (100) est également configuré pour, lors de la génération de l'ensemble de groupes (104) de portes quantiques :

ordonner un groupe (104) comportant plus de portes quantiques avant un groupe (104) comportant moins de portes quantiques dans l'ordre des groupes (104).

**2.** Dispositif (100) selon la revendication 1, configuré également pour, lors de la génération de l'ensemble de groupes (104) de portes quantiques :
générer les groupes (104) en fonction d'un nombre maximum possible de qubits dans un groupe (104).

**3.** Dispositif (100) selon la revendication 2, configuré également pour, lors de la génération de l'ensemble de groupes (104) de portes quantiques :

sélectionner une par une toutes les combinaisons possibles de qubits associés à la deuxième séquence (102) de portes quantiques en fonction du nombre maximum possible de qubits dans un groupe (104),
construire un groupe (104) pour chaque combinaison, et
sélectionner le groupe (104) contenant le plus grand nombre de portes quantiques.

**4.** Dispositif (100) selon la revendication 3, configuré également pour, lors de la génération de l'ensemble de groupes (104) de portes quantiques :

maintenir un ensemble de qubits verrouillés,
inclure une porte quantique dans un groupe (104), si la représentation matricielle de la porte quantique est diagonale, ignorer une porte quantique, si au moins l'un des qubits sur lesquels la porte quantique agit n'appartient pas à une combinaison choisie de qubits, et/ou
ignorer une porte quantique, si au moins l'un des qubits sur lesquels la porte quantique agit se trouve dans l'ensemble des qubits verrouillés,
ajouter tous les qubits sur lesquels une porte quantique agit à l'ensemble de qubits verrouillés, si cette porte quantique est ignorée, et
sinon, inclure une porte quantique dans un groupe (104).

**5.** Dispositif (100) selon l'une des revendications 1 à 4, configuré également pour, lors de la génération de l'ensemble de groupes (104) de portes quantiques :

déterminer un groupe (104) comportant un nombre maximum de portes quantiques,
sortir les portes quantiques du groupe déterminé (104), en particulier insérer les portes quantiques de sortie dans la troisième séquence (105) de portes quantiques, et
supprimer les portes quantiques de sortie de la deuxième séquence (102) de portes quantiques.

**6.** Dispositif (100) selon l'une des revendications 1 à 5, configuré également pour, lors du calcul de l'ensemble de qubits locaux (103a) et de l'ensemble de qubits globaux (103b) :
déterminer l'ensemble de qubits locaux (103a) et/ou l'ensemble de qubits globaux (103b) en fonction d'un nombre maximum de qubits locaux et/ou globaux, respectivement.

**7.** Dispositif (100) selon l'une des revendications 1 à 6, configuré également pour, lors de la génération de la deuxième séquence (102) de portes quantiques :
fusionner une porte quantique agissant sur un qubit unique avec une porte quantique adjacente dans la première séquence (101) de portes quantiques agissant sur un sous-ensemble de qubits comportant le même qubit unique.

**8.** Dispositif (100) selon l'une des revendications 1 à 7, configuré également pour, lors de la génération de la deuxième séquence (102) de portes quantiques :

inclure, dans la deuxième séquence (102) de portes quantiques, des portes quantiques qui fonctionnent sur au plus le nombre maximum de qubits locaux, et
si la première séquence (101) de portes quantiques comporte au moins une porte quantique agissant sur un qubit unique et une autre porte quantique agissant sur le même qubit et sur au moins un autre qubit, inclure, dans la deuxième séquence (102) de portes quantiques, cette porte à un qubit unique avec l'autre porte à plusieurs qubits.

**9.** Dispositif (100) selon l'une des revendications 1 à 8, configuré également pour, lors de la génération de la deuxième séquence (102) de portes quantiques :

créer une branche du premier algorithme glouton avec une porte quantique incluse dans la deuxième séquence (102) de portes quantiques, et/ou

créer une branche du premier algorithme glouton avec une porte quantique à partir de la première séquence (101) de portes quantiques ignorées,

ajouter tous les qubits sur lesquels une porte quantique agit à l'ensemble (103a) de qubits locaux, si cette porte quantique est incluse ou,

ajouter tous les qubits sur lesquels une porte quantique agit à l'ensemble de qubits verrouillés, si cette porte quantique est ignorée.

10. Dispositif (100) selon la revendication 9, configuré également pour, lors de la génération de la deuxième séquence (102) de portes quantiques :

créer au plus un nombre maximum de branches du premier algorithme glouton.

11. Dispositif (100) selon la revendication 9 ou 10, configuré également pour, lors de l'application d'une branche du premier algorithme glouton :

construire la deuxième séquence (102) de portes quantiques avec autant de portes que possible, et

tester chaque porte de la première séquence (101) de portes quantiques et l'ignorer ou l'inclure dans la deuxième séquence (102) de portes quantiques en fonction du résultat du test.

12. Dispositif (100) selon l'une des revendications 9 à 11, configuré également pour, lors de la génération de la deuxième séquence (102) de portes quantiques :

maintenir un ensemble de qubits verrouillés,

ignorer une porte quantique, si l'application de cette porte quantique nécessitera plus de qubits qu'un seuil prédéterminé pour être locale, et/ou

ignorer une porte quantique, si au moins l'un des qubits sur lesquels la porte quantique opère se trouve dans un ensemble de qubits verrouillés, et

ajouter tous les qubits sur lesquels une porte quantique agit à l'ensemble de qubits verrouillés, si cette porte quantique est ignorée.

13. Dispositif (100) selon l'une des revendications 1 à 12, configuré également pour, lors de la génération de la deuxième séquence (102) de portes quantiques :

inclure une porte quantique dans la deuxième séquence (102) de portes quantiques, si une représentation matricielle de cette porte quantique est diagonale et n'ajoute pas de qubits sur lesquels une porte quantique agit sur l'ensemble (103a) de qubits locaux, et/ou

inclure une porte quantique dans la deuxième séquence (102) de portes quantiques, si tous les qubits sur lesquels la porte quantique opère se trouvent déjà dans l'ensemble de qubits locaux (103a).

14. Dispositif (100) selon l'une des revendications 1 à 13, configuré également pour, lors du calcul de l'ensemble de qubits locaux (103a) et de l'ensemble de qubits globaux (103b) :

construire un ensemble de tous les qubits sur lesquels agissent les portes quantiques de la première séquence (101) de portes quantiques,

inclure, dans l'ensemble de qubits locaux (103a), tous les qubits sur lesquels agissent les portes quantiques de la deuxième séquence (102) de portes quantiques, et

inclure, dans l'ensemble de qubits globaux (103b), tous les qubits qui sont dans l'ensemble de tous les qubits et non dans l'ensemble de qubits locaux (103a).

15. Simulateur de circuit quantique (110) comprenant le dispositif (100) selon l'une quelconque des revendications 1 à 14.

16. Procédé mis en œuvre par ordinateur (700) pour la planification de portes quantiques et de qubits pour un simulateur de circuit quantique (110), le procédé comprenant :

l'obtention (701) d'une première séquence (101) de portes quantiques qui, lorsqu'elles sont exécutées sur le simulateur de circuit quantique (110), nécessitent d'effectuer des multiplications matrice-vecteur sur le simulateur de circuit quantique (110),

la génération (702) d'une deuxième séquence (102) de portes quantiques, qui est une sous-séquence de la première séquence (101) de portes quantiques, en utilisant un premier algorithme glouton avec retour en arrière,

le calcul (703) d'un ensemble de qubits locaux (103a) et un ensemble de qubits globaux (103b) en fonction de la deuxième séquence (102) de portes quantiques,

la génération (704) d'un ensemble de groupes (104) de portes quantiques en fonction de la deuxième séquence (102) de portes quantiques, dans lequel chaque groupe (104) comporte un sous-ensemble de portes quantiques de la deuxième séquence (102) de portes quantiques fusionnées ensemble en utilisant un second algorithme glouton sans retour en arrière,

la génération (705) d'une troisième séquence (105) de portes quantiques, qui contient toutes les portes quantiques de la deuxième séquence (102) de portes quantiques, selon un ordre des groupes (104),

la fourniture (706) de l'ensemble de qubits locaux (103a) et l'ensemble de qubits globaux (103b) au simulateur de circuit quantique (110), et

la transmission (707) de la troisième séquence (105) de portes quantiques au simulateur de circuit quantique (110)

dans lequel la génération (704) de l'ensemble de groupes (104) de portes quantiques comprend également :

le fait d'ordonner un groupe (104) comportant plus de portes quantiques avant un groupe (104) comportant moins de portes quantiques dans l'ordre des groupes (104).

17. Produit de programme informatique comprenant un code de programme qui, lorsque le programme est exécuté par un ordinateur, met en œuvre le procédé (700) selon la revendication 16.

**FIG. 1**

```
function GetClusters(gates,qubits,k):
    if gates is empty:
        return ∅
    cluster = ∅
    for each c ⊂ qubits and |c| = k:
        current = ∅
        locked = ∅
        for g in gates:
            if qubits(g) ∩ locked ≠ ∅ or qubits(g) ⊄ c:
                locked = locked ∪ qubits(g)
            else:
                current = current ∪ {g}
        if |current| > |cluster|:
            cluster = current
    return cluster + GetClusters(gates \ cluster)
```

**FIG. 2**

Start

Gates empty

No

Yes

Get all qubits combinations

Next combination

No

Yes

Remove gates from list

Update result

End

**FIG. 3**

```
Global parameters: gates, L_max
Global auxiliary variable: N_max = 0
Resulting permutation of qubits: locals_new = ∅


function GetStage(g, locals, locked, B_max, N):
    if N > N_max :
        N_max = N
        locals_new = locals
    if g is null:
        return
    if ∀q ∈ ALLQUBITS: q ∈ locked:
        return
    if ∃q ∈ qubits(g): q ∈ locked :
        GetStage(next(gates), locals, locked ∪ qubits(g), B_max, N)
    else if g is diagonal:
        GetStage(next(gates), locals, locked, B_max, N + 1)
    else if |qubits(g) ∪ locals| > L_max :
        GetStage(next(gates), locals, locked ∪ qubits(g), B_max, N)
    else if ∀q ∈ qubits(g): q ∈ locals :
        GetStage(next(gates), locals, locked, B_max, N + 1)
    else:

        GetStage(next(gates), locals ∪ qubits(g), locked, (B_max-1)/2, N)

        if B_max > 0:

            GetStage(next(gates), locals, locked ∪ qubits(g), (B_max-1)/2, N)
```

**FIG. 4**

EP 3 903 242 B1

GetStage(g, locals, locked, B, N)

Locked gate

No

Yes

Diagonal gate

No

Yes

To many local gates

No

Yes

Already local qubit

No

Yes

Branching

Take gate

Take gate update locals

Skip gate

**FIG. 5**

(a)

| Qubits | Depth | Gates | Clusters 3 qubits | Stages, 3 qubits | Clusters, 9 qubits | Stages, 9 qubits |
|---|---|---|---|---|---|---|
| 16 | 20 | 148 | 18 | 3 | 17 | 6 |
| 20 | 30 | 291 | 35 | 3 | 32 | 6 |
| 25 | 40 | 494 | 62 | 3 | 58 | 5 |
| 30 | 50 | 762 | 95 | 4 | 89 | 6 |
| 36 | 60 | 1133 | 140 | 4 | 134 | 5 |
| 42 | 70 | 1548 | 184 | 4 | 181 | 5 |
| 49 | 80 | 2106 | 253 | 4 | 249 | 6 |
| 56 | 90 | 2739 | 326 | 4 | 333 | 5 |

(b)

| Number of qubits | Time of our simulator with scheduling, sec | Time of QuEST simulator, sec |
|---|---|---|
| 30 | 25 | 167 |
| 33 | 83 | 1368 |
| 35 | 479 | 5042 |
| 36 | 955 | 10191 |

**FIG. 6**

700

701 Obtain a first sequence of quantum gates.

702 Generate a second sequence of quantum gates, which is a subsequence of the first sequence of quantum gates, by using a greedy algorithm, in particular with backtracking.

703 Calculate a best local qubits set and a best global qubits set based on the second sequence of quantum gates.

704 Generate a set of clusters of quantum gates, wherein each cluster includes a subset of the quantum gates of the second sequence of quantum gates merged together by using a greedy algorithm.

705 Generate a third sequence of quantum gates, which contains all quantum gates from the second sequence of quantum gates, according to an order of the clusters.

706 Provide the best local qubits set and the best global qubits sets to the quantum circuit simulator.

707 Output the third sequence of quantum gates to the quantum circuit simulator.

**FIG. 7**

| | |
|---|---|
| $X = \begin{vmatrix} 0 & 1 \\ 1 & 0 \end{vmatrix}$ | |
| $Y = \begin{vmatrix} 0 & -i \\ i & 0 \end{vmatrix}$ | |
| $Z = \begin{vmatrix} 1 & 0 \\ 0 & -1 \end{vmatrix}$ | |
| $H = \dfrac{1}{\sqrt{2}} \begin{vmatrix} 1 & 1 \\ 1 & -1 \end{vmatrix}$ | |
| $T = \begin{vmatrix} 1 & 0 \\ 0 & e^{i\frac{\pi}{4}} \end{vmatrix}$ | |
| $CNOT = \begin{vmatrix} 1 & 0 & 0 & 0 \\ 0 & 1 & 0 & 0 \\ 0 & 0 & 0 & 1 \\ 0 & 0 & 1 & 0 \end{vmatrix}$ | |
| $CZ = \begin{vmatrix} 1 & 0 & 0 & 0 \\ 0 & 1 & 0 & 0 \\ 0 & 0 & 1 & 0 \\ 0 & 0 & 0 & -1 \end{vmatrix}$ | |

**FIG. 8**

**FIG. 9**

**FIG. 10**

EP 3 903 242 B1

Swap positions of $2^{nd}$ and $5^{th}$ qubits

MPI_Alltoall

FIG. 11

FIG. 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **PEDRAM MASSOUD et al.** Layout Optimization for Quantum Circuits with Linear Nearest Neighbor Architectures. *IEEE CIRCUITS AND SYSTEMS MAGAZINE,* vol. 16 (2), 62-74